Europäisches Patentamt

European Patent Office

Office européen des brevets

(11) Publication number: **0 079 713**
**B1**

(12) **EUROPEAN PATENT SPECIFICATION**

(45) Date of publication of patent specification: 02.07.86

(51) Int. Cl.⁴: **B 65 G 19/24, E 21 F 13/06**

(21) Application number: **82305786.4**

(22) Date of filing: **01.11.82**

(54) Improvements in scraper chain conveyors.

(30) Priority: **02.11.81 GB 8132923**

(43) Date of publication of application:
**25.05.83 Bulletin 83/21**

(45) Publication of the grant of the patent:
**02.07.86 Bulletin 86/27**

(84) Designated Contracting States:
**AT DE FR GB**

(56) References cited:
**DE-A-2 604 792**
**DE-A-2 807 883**
**DE-A-3 016 151**
**DE-B-1 506 979**
**DE-B-2 031 874**

(73) Proprietor: **PARSONS CONTROLS LIMITED**
**Stourport on Severn**
**Stourport Worcestershire DY13 9AT (GB)**

(72) Inventor: **Millington, Michael John**
**24 Kendlewood Road**
**Kidderminster Worcestershire DY10 2XQ (GB)**

(74) Representative: **Lewis, David Overington**
**c/o Babcock International plc Cleveland House**
**19 St. James's Square**
**London SW1Y 4LN (GB)**

Courier Press, Leamington Spa, England.

## Description

This invention relates to scraper chain conveyors and, more particularly, to scraper chain conveyors used to move particulate material, such as coal, along troughs or pans, by means of scraper bars secured to chains running centrally, or inboard, of the troughs or pans.

In DE—A—28 07 883 there is described a scraper chain conveyor having bars secured to a chain running centrally of pans or troughs, the scraper bars each being formed with a centrally disposed seating section having a profile corresponding to a horizontally extending link of chain with a central land engaging the inner part of the link and recesses accommodating the adjoining links, a retaining plate being arranged to co-act with the seating section to retain the link of chain therebetween by means of bolts extending through the retaining plate and the scraper bar. In the description of the prior art in DE—A—28 07 883 it is mentioned that it is known to have a similar arrangement for a double centre chain conveyor in which a retaining plate is secured to the scraper bar by means of horizontally extending bolts. However, the specification states that the use of horizontally extending bolts can cause considerable difficulties and goes on to propose the use of bolts extending at an acute angle (in the drawings, approximately 30° to the vertical) and extending perpendicularly through the mating surfaces of the retaining plate and scraper bar. In such an arrangement, clamping can only be achieved if the various components are precision machined and assembled and frequently rigid clamping is not obtained. With the chain link free to move, even by a limited amount, on the seating, accelerated wear results as a result of the abrasive nature of the conveyed material.

It is an aim of the invention to provide an arrangement achieving a more positive clamping of the scraper bar to the conveyor chain, particularly for a double centre chain scraper chain conveyor.

In DE—A—30 16 151 there is described an attachment arrangement for connecting a variety of bars to conveyor chain, including a double centre chain scraper chain conveyor, in which horizontally extending bolts secure retaining plates to scraper bars. Mating surfaces of the retaining plates and the scraper bars are inclined at an angle of up to 45° and the aperture in either the scraper bar or the retaining plate is of elongated cross-section to permit limited relative movement between the scraper bar and the retaining plate in a direction perpendicular to the bolt axis and thereby provide a sliding clamping action. However, machining of apertures with elongated cross-section can be expensive and, in addition, there is the danger of the abrasive material being conveyed entering the slot and causing accelerated wear.

In DE—A—26 04 792 there is disclosed an arrangement in which an outboard spaced chain scraper chain conveyor has scraper bars connected between the spaced chains by means of connections at the ends of the bars. The connectors have a pocket form arranged to locate over and mate with an associated horizontal link, thereby ensuring a greater area of contact between the connector and the link. A vertically extending bolt secures the connector to the scraper bar.

As indicated in the aforesaid DE—A—28 07 883 the use of vertically extending bolts can be disadvantageous.

According to the present invention there is provided a scraper chain conveyor having scraper bars secured to chain links running centrally of pans or troughs, the scraper bars being formed with centrally disposed seating sections having profiles corresponding to horizontally disposed links of chain with lands engaging the inner parts of the links and recesses accommodating the adjoining links and retaining plates arranged to co-act with the seating sections to retain the links of chains therebetween (DE—A—28 07 883), characterised in that the scraper bars are secured to a pair of centrally disposed chains by said retaining plates spanning both chains and secured to the scraper bar by bolts extending through corresponding cylindrical bores in upright portions of the scraper bars and retaining plates at a slight inclination to the direction of motion of the conveyor, the scraper bars also being formed with shoulders engaging the outer parts of the links and matching abutting faces on the scraper bar and the retaining plate lying in planes inclined at acute angles to the longitudinal axes of the bolts and to the direction of motion of the conveyor.

The offset force applied through the bolt, across the matching faces at an acute angle serves to provide a clamping effect.

The invention will now be described, by way of example, with reference to the accompanying, partly diagrammatic, drawings in which:—

Figure 1 is an elevation of a portion of a scraper bar symmetrical about a central plane and arranged as if in an upper race of a pan, with an intermediate portion omitted;

Figure 2 corresponds to Figure 1 but shows the scraper bar arranged as if in a lower race of a pan;

Figure 3 is a plan view of the scraper bar of Figure 2;

Figures 4 to 8 are cross-sectional views respectively taken on the lines IV—IV to VIII—VIII of Figures 1 to 3;

Figure 9 is an elevation of a portion of a retaining plate symmetrical about a central plane and arranged as if to co-act with a scraper bar in the upper race of the pan;

Figure 10 is a plan view corresponding to Figure 9;

Figure 11 is an end elevation corresponding to Figure 9; and

Figures 12 and 13 are cross-sectional views respectively taken on the lines XII—XII and XIII—XIII of Figure 9.

A scraper chain conveyor includes a pair of endless conveyor chains passing over sprocket wheels and running in upper and lower races formed by inwardly lipped flanges on pans or troughs extending along the length of the conveyor. The conveyor chains are disposed centrally, or inboard, of the pans and carry, at spaced intervals, scraper bars.

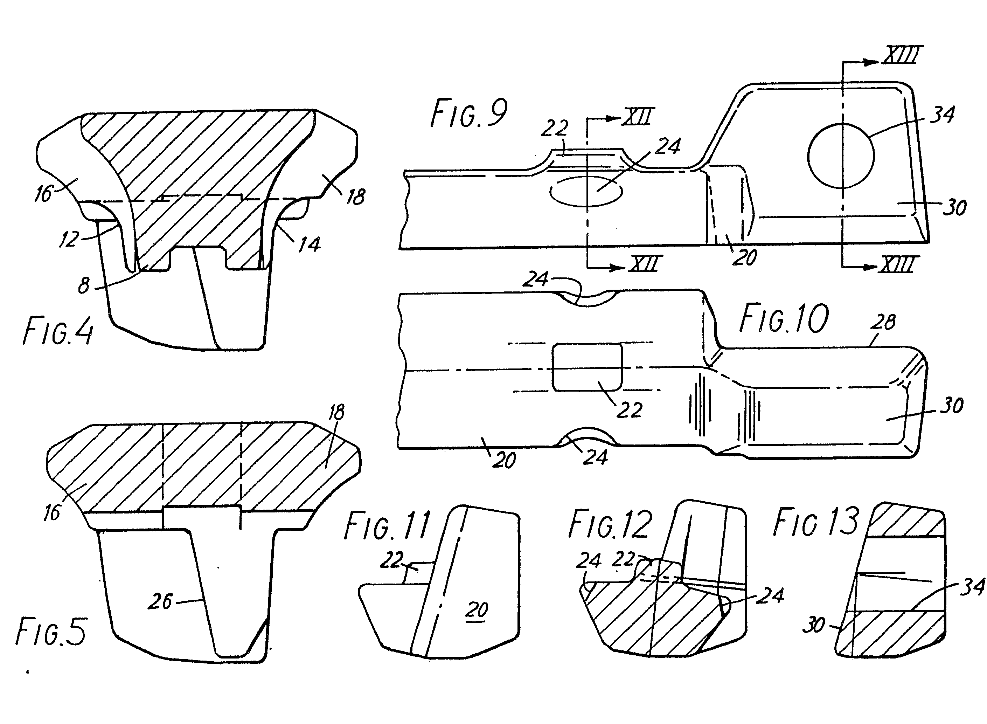

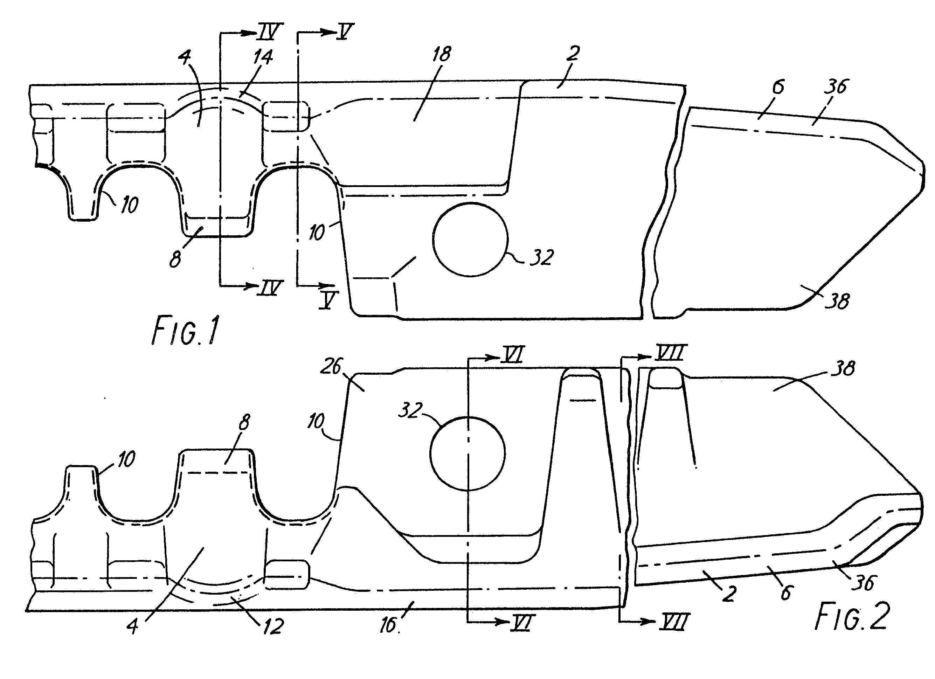

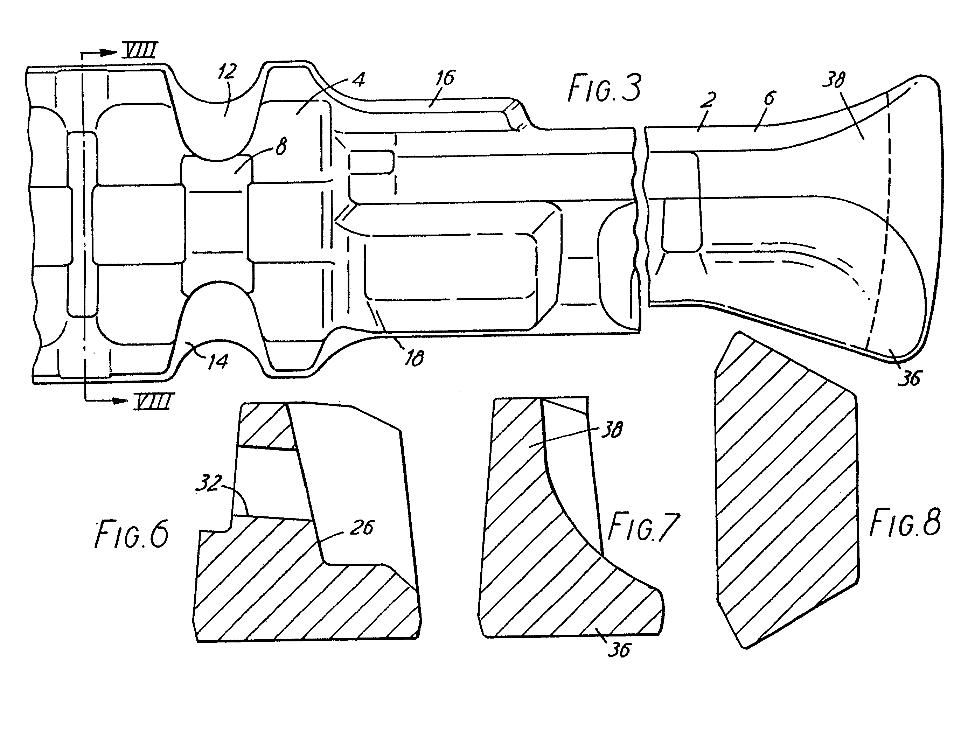

Referring to Figures 1 to 8 each scraper bar 2 includes a seating section 4 disposed centrally of outer end portions or arms 6. The seating section is profiled to conform to horizontally disposed links of chain, one in each of the conveyor chains, recessed lands 8 engaging the inner parts of the links and shoulders 10 engaging outer parts of the links. Recesses 12, 14 in the leading and trailing edges 16, 18 accommodate the adjoining vertically disposed, links of chains.

Referring to Figures 9 to 13 a retaining plate 20 is arranged to co-act with the seating section 4 with low lands 22 arranged to engage the inner parts of the recessed lands 8 and recesses 24 accommodating the adjoining links. Matching faces 26, 28 are provided on the scraper bar 2 adjacent the seating section 4 and on outer portions 30 of the retaining plate 20 to lie in a plane inclined approximately 79° to the direction of motion of the conveyor and are penetrated by bores 32, 34 having axes inclined approximately 5° to the direction of motion of the conveyor. Bolts (not shown) extend through the bores 32, 34 and are secured with self-retaining nuts.

The outer end portions or arms 6 of the scraper bars have a cross-section tapering from a broad head portion 36 to a narrower base portion 38 adjacent the web of the pan. Adjacent the central part of the scraper bar the combined seating section 6 and retaining plate 20 give a cross-section approximating to a trapezoid.

On assembly, the retaining plate 20 is positioned intermediate the chains and the pan web in the upper run in register with a pair of horizontally disposed links. The scraper bar 2 is then positioned in register with the retaining plate seating on the conveyor chains, the low lands 22 seating in the recessed lands 8 and bolts inserted through the bores 32, 34. The self-retaining nuts are then tightened down on the bolts to urge the matching faces 26, 28 into engagement and thereby secure with a clamping effect, the scraper bar upon the chains by virtue of the offset force applied through the bolt across the matching faces at an acute angle.

## Claims

1. A scraper chain conveyor having scraper bars (2) secured to chain links running centrally of pans or troughs, the scraper bars being formed with centrally disposed seating sections (4) having profiles corresponding to horizontally disposed links of chain with lands (8) engaging the inner parts of the links, and retaining plates (20) arranged to co-act with the seating sections (4) to retain the links of chains therebetween, characterised in that the scraper bars (2) are secured to a pair of centrally disposed chains by said retaining plates (20) spanning both chains and secured to the scraper bar by bolts extending through corresponding cylindrical bores in upright portions of the scraper bars and retaining plates at a slight inclination to the direction of motion of the conveyor, the scraper bars also being formed with shoulders (10) engaging the outer parts of the links and matching abutting faces (26, 28) on the scraper bar and the retaining plate lying in planes inclined at acute angles to the longitudinal axes of the bolts and to the direction of motion of the conveyor.

2. A scraper chain conveyor as claimed in Claim 1, characterised in that the matching abutting faces (26, 28) lie on a plane inclined approximately 79° to the direction of motion of the conveyor and the bores (32, 34) have axes inclined approximately 5° to the direction of motion of the conveyor.

3. A scraper chain conveyor as claimed in Claim 1 or Claim 2 characterised in that the lands (8) are each formed with a recess and a corresponding low land (22) on the retaining plates (20) is arranged to mate therewith.

## Revendications

1. Transporteur à chaîne à raclettes comprenant des barres racleuses (2) fixées à des maillons de chaîne se déplaçant au milieu d'auges ou bacs, les barres racleuses comportant des parties d'embase (4) disposées au centre, lesdites parties ayant des profils correspondant à des maillons de chaîne placés horizontalement avec des portées (8) s'engageant avec les parties intérieures des maillons, et des plaques de blocage (20) disposées pour coopérer avec les parties d'embase (4) pour bloquer les maillons de chaîne y interposés, caractérisé en ce que les barres racleuses (2) sont fixées à une paire de chaînes disposées au centre au moyen des plaques de blocage (20) chevauchant les deux chaînes et fixées à la barre racleuse par des boulons traversant des alésages cylindriques correspondants de parties verticales des barres racleuses et des plaques de blocage, avec une légère inclinaison sur la direction de déplacement du transporteur, les barres racleuses comportant également des épaulements (10) s'engageant avec les parties extérieures des maillons et des surfaces d'appui correspondantes (26, 28) sur la barre racleuse et la plaque de blocage se trouvant dans des plans inclinés à des angeles aigus sur les axes longitudinaux des boulons et sur la direction de déplacement du transporteur.

2. Transporteur à chaîne à raclettes selon la revendication 1, caractérisé en ce que les surfaces d'appui correspondantes (26, 28) se trouvent dans un plan incliné approximativement à 79° sur la direction de déplacement du transporteur et que les axes des alésages (32, 34) sont inclinés approximativement à 5° sur la direction de déplacement du transporteur.

3. Transporteur à chaîne à raclettes selon l'une des revendications 1 et 2, caractérisé en ce que les portées (8) comportant chacune une empreinte et une saillie correspondante (22) sur les plaques de blocage (20) est adaptée à s'y emboîter.

## Patentansprüche

1. Kratzkettenförderer mit Kratzstäben (2), die mit Kettengliedern verbunden sind, die mittig zu Pfannen oder Trögen laufen, wobei die Kratzstäbe mit mittig angeordneten Auflagerabschnitten (4) versehen sind, deren Profile den horizontal angeordneten Kettengliedern entsprechen, Stege (8) mit den inneren Teilen der Glieder in Eingriff stehen und Halteplatten (20) mit den Auflagerabschnitten (4) zusammenwirken, um dazwischen die Kettenglieder zu halten, dadurch gekennzeichnet, daß die Kratzstäbe (2) mit zwei zentrisch angeordneten Ketten durch diese Halteplatten (20) verbunden sind, die beide Ketten überspannen und mit dem Kratzstab durch Bolzen verbunden sind, die sich durch entsprechende zylindrische Bohrungen in aufrecht stehenden Abschnitten der Kratstäbe und Halteplatten mit einer geringfügigen Neigung zur Bewegungsrichtung des Förderers erstrecken, wobei die Kratzstäbe auch mit Schultern (10) versehen sind, die mit den äußeren Teilen der Glieder in Eingriff stehen, und zusammenpassende, aneinanderliegende Flächen (26, 28) am Kratzstab und der Halteplatte in Ebenen liegen, die unter spitzen Winkeln zu den Längsachsen der Bolzen und zur Bewegungsrichtung des Förderers liegen.

2. Kratzkettenförder nach Anspruch 1, dadurch gekennzeichnet, daß die aneinanderliegenden Flächen (26, 28) in einer Ebene liegen, die ungefähr 79° zur Bewegungsrichtung des Förderers geneigt ist, und daß die Bohrungen (32, 34) Achsen haben, die ungefähr 5° zur Bewegungsrichtung des Förderers geneigt sind.

3. Kratzkettenförderer nach Anspruch 1 oder 2, dadurch gekennzeichnet, daß die Stege (8) jeweils mit einer Ausnehmung versehen sind und ein entsprechender niederer Steg (22) an den Halteplatten (20) vorgesehen ist, um damit zusammenzupassen.

FIG.9

FIG.4

16
12
8
14
18

FIG.5

16
18
26

FIG.10

22
24
34
30
20
XII
XIII

24
22
20
24
28
30

FIG.11

22
20

FIG.12

24 22
24

FIG 13

30
34

0 079 713

FIG.1

FIG.2

0 079 713

FIG.3

12 4 16 FIG.3 2 6 38

8

14

18

36

FIG.6 FIG.7 FIG.8

32 26 38 36

3

0 079 713